# FASCICULE DE BREVET EUROPEEN

(11) **EP 3 063 817 B1**
(45) Date de publication et mention de la délivrance du brevet: **21.02.2018**
(21) Numéro de dépôt: 14805974.4
(22) Date de dépôt: 22.10.2014
(51) Int. Cl.: H01M 8/0245, H01M 8/1004, H01M 8/0234, H01M 8/0247, H01M 8/0263, H01M 8/1007, H01M 8/1018

(54) **PILE A COMBUSTIBLE A FONCTIONNEMENT OPTIMISE LE LONG DU CANAL D'ECOULEMENT D'AIR**
BRENNSTOFFZELLE MIT BETRIEBSOPTIMIERUNG ENTLANG DES LUFTFÜHRUNGSKANALS
FUEL CELL WITH OPTIMISED OPERATION ALONG THE AIR FLOW CHANNEL

(30) Priorité: 30.10.2013 FR 1360644
(43) Date de publication de la demande: 07.09.2016
(73) Titulaire: Commissariat à l'Energie Atomique et aux Energies Alternatives, 75015 Paris (FR)
(72) Inventeur: ALLIX, Jérémy, 38000 Grenoble (FR); JABBOUR, Lara, 38000 Grenoble (FR); ROCH, Jean-Sébastien, 38100 Grenoble (FR); VINCENT, Rémi, 38000 Grenoble (FR)
(74) Mandataire: GIE Innovation Competence Group
(86) Numéro de dépôt international: PCT/FR2014/052683
(87) Numéro de publication internationale: WO 2015/063392

(56) Documents cités:
- EP-A2- 1 176 654
- WO-A1-02/084763
- US-A1- 2004 038 808

## Description

L'invention concerne les piles à combustible, et en particulier les piles à combustible à membrane d'échange de protons (dites PEM pour Proton Exchange Membrane en langue anglaise).

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé et ionisé sur une électrode de la pile et du dioxygène de l'air est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices d'écoulement pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Les AME présentent un fonctionnement hétérogène sur la longueur des canaux d'écoulement d'air et d'hydrogène. Du côté de la cathode par exemple, l'évolution de l'humidité relative des gaz entre l'entrée (conditions asséchantes) et la sortie (conditions de noyage) du canal d'écoulement a une incidence sur l'hétérogénéité de la densité de courant. La densité de courant est plus faible à l'entrée du canal d'écoulement du fait d'une humidité insuffisante. La densité de courant est également plus faible à la sortie du canal d'écoulement, du fait d'une humidité excessive pouvant noyer l'AME. Cette hétérogénéité de densité de courant favorise les phénomènes de dégradation comme la corrosion localisée du carbone ou la maturation du catalyseur.

Le document US2004/038808 décrit une structure d'assemblage membrane/électrodes. Dans cette structure, la concentration en catalyseur de la cathode varie avec un gradient selon un axe. Ce document décrit une couche de diffusion gazeuse homogène.

Le document EP1176654 décrit une structure de pile à combustible dans laquelle une même électrode combine une couche catalytique et une couche de diffusion gazeuse, dont les propriétés varient dans différentes zones.

Le document US6933067 propose de réaliser une cathode ayant un chargement en platine croissant en partant de la sortie d'air jusqu'à l'entrée d'air. Ainsi, on génère une importante quantité d'eau en entrée de ce canal d'écoulement afin d'y accroître la densité de courant. Une telle cathode est cependant relativement délicate à réaliser correctement à l'échelle industrielle.

L'invention vise à résoudre cet inconvénient et à proposer une solution alternative à ce problème technique, tout en facilitant le positionnement précis d'une couche de diffusion gazeuse. L'invention porte ainsi sur une pile à combustible telle que définie dans les revendications annexées. L'invention porte également sur un procédé de fabrication d'une pile à combustible, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible ;
- la figure 2 est une vue de dessus d'une plaque d'écoulement comportant un exemple de tracé de canal d'écoulement ;
- la figure 3 est une vue de dessous d'une couche de diffusion gazeuse de cathode selon un exemple de mode de réalisation de l'invention ;
- la figure 4 est une vue de dessous d'un assemblage membrane/électrodes muni d'un renfort, destiné à être associé à la couche de diffusion gazeuse de la figure 3 ;
- la figure 5 est une vue en coupe d'une cellule de pile à combustible selon un exemple de mode de réalisation de l'invention ;
- la figure 6 est un diagramme illustrant les performances respectives d'une pile à combustible selon l'état de la technique et selon un mode de réalisation de l'invention ;
- la figure 7 illustre une séquence d'étapes d'un exemple de procédé de fabrication selon l'invention.

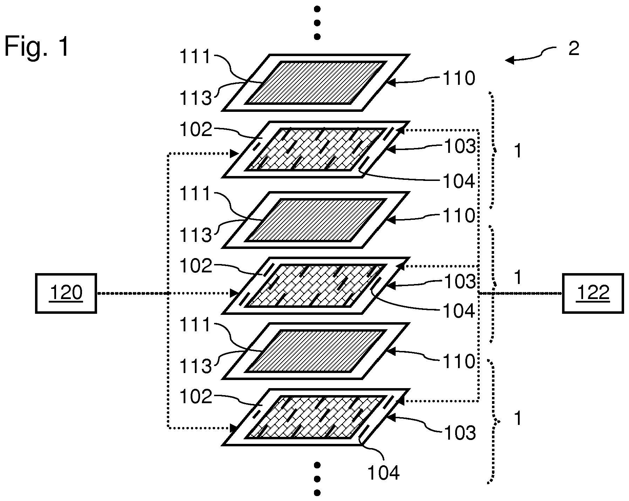

La figure 1 est une vue en perspective éclatée schématique d'un empilement de cellules 1 d'une pile à combustible 2. La pile à combustible 2 comprend plusieurs cellules 1 superposées. Les cellules 1 sont du type à membrane échangeuse de protons ou membrane à électrolyte polymère.

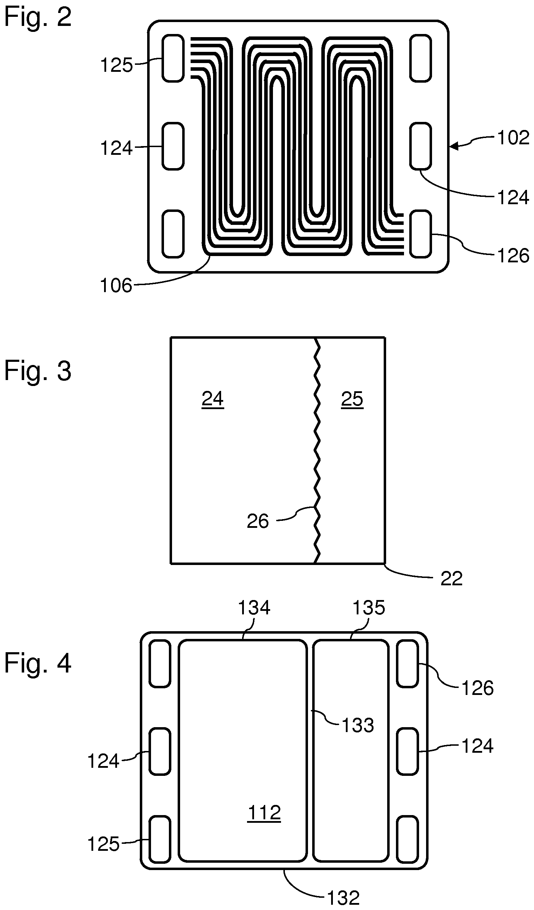

La pile à combustible 2 comprend une source de carburant 120 alimentant en dihydrogène une entrée de chaque cellule 1. La pile à combustible 2 comprend également une source d'air 122 alimentant une entrée de chaque cellule en air, contenant de l'oxygène utilisé comme oxydant. Chaque cellule 1 comprend également des canaux d'échappement. Chaque cellule 1 peut également présenter un circuit de refroidissement (illustré à la figure 2).

Chaque cellule 1 comprend un assemblage membrane/électrodes 110. La pile à combustible 2 illustrée comprend notamment des assemblages membrane/électrodes ou AME 110. Un assemblage membrane/électrodes 110 comprend un électrolyte 113, une cathode 112 (non illustrée à la figure 1) et une anode 111 placées de part et d'autre de l'électrolyte et fixées sur cet électrolyte 113.

Entre chaque couple d'AME adjacents, un couple de guides d'écoulement est disposé. Les guides d'écoulement de chaque couple sont solidaires pour former une plaque bipolaire 103. Chaque guide d'écoulement est par exemple formé d'une feuille métallique, usuellement en acier inoxydable. Une plaque bipolaire 103 comprend ainsi une feuille métallique 102 orientée vers une cathode d'une AME 110 et une feuille métallique 101 (non illustrée à la figure 1) orientée vers une anode d'une autre AME 110. Les feuilles métalliques 101 et 102 comportent des surfaces en relief définissant des canaux d'écoulement 106 (non illustrés à la figure 1). Les feuilles métalliques 101 et 102 sont solidarisées par des soudures 104.

De façon connue en soi, durant le fonctionnement de la cellule 1, de l'air s'écoule entre l'AME et la feuille métallique 102, et du dihydrogène s'écoule entre l'AME et la feuille métallique 101. Au niveau de l'anode 111, le dihydrogène est ionisé pour produire des protons qui traversent l'AME. Les électrons produits par cette réaction sont collectés par la feuille métallique 102. Les électrons produits sont ensuite appliqués sur une charge électrique connectée à la pile à combustible 2 pour former un courant électrique. Au niveau de la cathode 112, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre l'anode et la cathode de l'ordre de 1V. Le matériau catalyseur utilisé à l'anode 111 ou à la cathode 112 est avantageusement du platine, pour ses excellentes performances catalytiques.

La figure 2 est une vue de dessus d'un exemple de feuille métallique 102 d'une pile à combustible 2. La feuille métallique 102 délimite des canaux d'écoulement 106. Les canaux d'écoulement 106 s'étendent entre un conduit d'entrée d'air 125 et un conduit de sortie d'eau 126. La feuille métallique 102 est par ailleurs traversée par un conduit d'écoulement de liquide de refroidissement 124.

La figure 3 est une vue de dessous d'un exemple de couche de diffusion gazeuse 22 placée en contact avec la feuille métallique 102 et recouvrant les canaux d'écoulement 106. La couche de diffusion gazeuse 22 comporte une première partie 24 et une deuxième partie 25. La première partie 24 recouvre une partie des canaux d'écoulement 106 depuis l'entrée d'air 125. La deuxième partie recouvre une partie des canaux d'écoulement 106 depuis la sortie d'eau 126. Les parties 24 et 25 de la couche de diffusion gazeuse 22 sont accolées. Les parties 24 et 25 sont ici deux composants distincts, accolés au niveau d'une interface 26. Les parties 24 et 25 sont avantageusement accolées sans se chevaucher, afin d'éviter de former une surépaisseur au niveau de l'interface 26.

Les parties 24 et 25 présentent des compositions différentes. Ainsi, la composition de la partie 24 présente une densité de courant en conditions sèches supérieure à celle de la composition de la partie 25. La partie 24 permet ainsi d'obtenir une densité de courant supérieure à proximité de l'entrée d'air, sur le début du canal d'écoulement 106, en conditions asséchantes lorsque encore peu d'eau a été générée dans le canal d'écoulement 106. La partie 24 s'étend par exemple entre 15 et 50 % de la longueur du canal d'écoulement 106 depuis l'entrée d'air. La composition de la partie 25 présente une densité de courant en conditions humides supérieure à celle de la composition de la partie 24. La partie 25 s'étend par exemple entre 50 et 85% de la longueur du canal d'écoulement 106 depuis la sortie d'eau. La partie médiane du canal d'écoulement 106, dans laquelle le niveau d'humidité est intermédiaire, bénéficie ainsi de la composition de la partie 25.

L'homme du métier pourra déterminer plus précisément la répartition des parties 24 et 25 sur la longueur du canal d'écoulement 106 avec une carte d'acquisition des courant localisés disposée dans l'empilement des cellules 1, avec un test préalable sur une couche de diffusion gazeuse 21 uniforme. Une telle carte permet notamment de déterminer les zones dans lesquelles la densité de courant est plus faible, afin de déterminer jusqu'où doit s'étendre la partie 25.

Des tests ont notamment été réalisés avec une carte d'acquisition de courant présentant une matrice de 20 par 24, chaque élément de la matrice présentant une surface de 0,45cm².

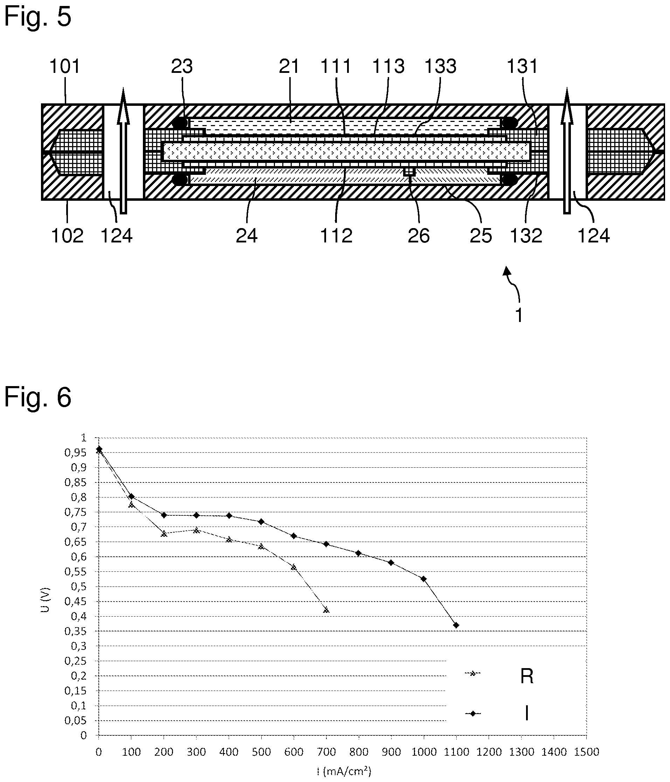

La partie 24 peut être formée d'une couche de diffusion gazeuse diffusée par la société Freudenberg FCCT sous la référence commerciale H2 415-I2-C3. La partie 25 peut être formée d'une couche de diffusion gazeuse diffusée par la société SGL Group sous la référence commerciale 24BC. La figure 6 est un diagramme comparant les courbes de polarisation respectives de piles à combustible R et I. La pile à combustible R inclut une couche de diffusion gazeuse constituée uniquement et d'un seul tenant de la couche diffusée par la société SGL Group sous la référence commerciale 24BC. La pile à combustible I inclut une couche de diffusion gazeuse ayant une partie 24 de type Freudenberg H2 415-I2-C3 et une partie 25 de type SGL Group 24BC. On note une augmentation sensible de la densité de courant moyenne et une homogénéisation de cette densité quelles que soient les conditions de fonctionnement.

Les conditions sèches sont par exemple déterminées pour une humidité relative de 20%. Les conditions humides sont par exemple déterminées pour une humidité relative de 100%.

Pour faciliter un positionnement satisfaisant entre les première et deuxième parties 24 et 25, celles-ci présentent avantageusement des bordures accolées de formes complémentaires et non rectilignes, comme illustré dans l'exemple de la figure 3.

La figure 4 est une vue de dessous d'un exemple de renfort 132 s'avérant particulièrement avantageux dans le cadre de l'invention. Le renfort 132 est fixé à un assemblage membrane/électrodes 103. Le renfort 132 comporte une première ouverture médiane 134 et une deuxième ouverture médiane 135. Ces ouvertures médianes 134 et 135 sont séparées par une bande 133. Les ouvertures médianes 134 et 135 découvrent une partie de la cathode 112. Le renfort 132 est en outre traversé par le conduit d'entrée d'air 125, par le conduit de sortie d'eau 126 et par le conduit d'écoulement de liquide de refroidissement.

La figure 5 est une vue en coupe transversale d'une cellule 1 de la pile à combustible 2 assemblée.

Un renfort 131 est fixé à l'assemblage membrane/électrodes. Le renfort 131 comporte une bordure interne qui recouvre la périphérie de l'anode 111. La bordure interne est solidarisée à l'anode 111. Le renfort 131 s'étend au-delà de la périphérie de l'anode 111 et forme un recouvrement sur la membrane 113. Le renfort 131 est solidarisé à la membrane 113. La solidarisation du renfort 131 à l'anode 111 et à la membrane 113 peut être réalisé par tous moyens appropriés, par exemple par pressage à chaud par impression de l'anode 111 sur le renfort 131. Le renfort 131 comporte une ouverture médiane. Cette ouverture médiane découvre la partie médiane de l'anode 111.

La couche de diffusion gazeuse 21 est comprimée entre l'anode 111 et la feuille métallique 101. La couche de diffusion gazeuse 21 traverse ainsi l'ouverture médiane du renfort 131 et est en contact avec l'anode 111.

Le renfort 132 est fixé à l'assemblage membrane/électrodes et au renfort 131. Le renfort 132 comporte des bordures internes qui recouvrent la périphérie de la cathode 112. Les bordures internes sont solidarisées à la cathode 112. Le renfort 132 s'étend au-delà de la périphérie de la cathode 112 et forme un recouvrement sur la membrane 113. Le renfort 132 est solidarisé à la membrane 113. Les renforts 131 et 132 sont fixés l'un à l'autre à leur périphérie.

La partie 24 de la couche de diffusion gazeuse 22 est comprimée entre la cathode 112 et la feuille métallique 102. La partie 24 traverse ainsi l'ouverture médiane 134 du renfort 132 et est en contact avec la cathode 112. La partie 25 de la couche de diffusion gazeuse 22 est comprimée entre la cathode 112 et la feuille métallique 102. La partie 25 traverse ainsi l'ouverture médiane 135 du renfort 132 et est en contact avec la cathode 112. L'interface 26 entre les parties 24 et 25 se superpose à la bande 133 séparant les ouvertures 134 et 135. On évite ainsi que des aspérités potentiellement présentes au niveau des bordures des parties 24 et 25 ne risquent d'altérer voir percer la cathode 112 ou la membrane 113. On peut éviter un composant supplémentaire dans la cellule 1, en utilisant une bande 133 formée d'un seul tenant avec le renfort 132 déjà utilisé.

Des joints 23 peuvent être positionnés autour des couches de diffusion gazeuses 21 et 22, afin de garantir l'étanchéité entre le renfort 131 et la feuille métallique 101 ou l'étanchéité entre le renfort 132 et la feuille métallique 102.

La couche de diffusion gazeuse 22 est comprimée entre la cathode 112 et la feuille métallique 102. Sous cette compression, les première et deuxième parties 24 et 25 de la couche de diffusion gazeuse 22 présentent une même épaisseur, pour limiter les déformations et hétérogénéités de l'empilement de cellules 1 et éviter d'éventuels problèmes d'étanchéité à la périphérie de l'empilement. Les première et deuxième parties 24 et 25 peuvent présenter des épaisseurs distinctes en l'absence de compression et être dimensionnées en fonction de leur module d'élasticité pour présenter une même épaisseur lorsqu'elles sont soumises à la compression de la cellule 1.

Pour une compression de 1 MPa après assemblage, les parties 24 et 25 présentent avantageusement une épaisseur d'environ 190µm ±40µm.

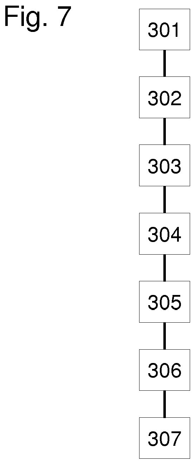

La figure 7 illustre une séquence de plusieurs étapes d'un exemple de procédé de fabrication d'une cellule 1 d'une pile à combustible 2 selon un mode de réalisation de l'invention.

Un renfort 132 est fourni à l'étape 301. Le renfort 132 est avantageusement plan. Le renfort 132 présente par exemple des contours prédécoupés correspondant aux ouvertures 134 et 135 à former, ces contours étant séparés par la bande 133.

A l'étape 302, on dépose une encre électrocatalytique en phase liquide, destinée à former la cathode 112 après séchage. La cathode 112 peut être solidifiée par tous moyens appropriés. La cathode 112 formée s'étend au-delà des contours prédécoupés. On crée ainsi une superposition entre des bordures internes du renfort 132 et la périphérie de la cathode 112. L'anode 111 peut être formée de façon similaire sur un renfort 131 présentant un contour prédécoupé correspondant à son ouverture médiane.

Le matériau électrocatalytique présente des propriétés catalytiques adaptées pour la réaction catalytique à réaliser. Le matériau électrocatalytique peut se présenter sous la forme de particules ou de nano particules incluant des atomes métalliques. Le matériau catalyseur peut notamment comprendre des oxydes métalliques. Le matériau électrocatalytique peut être un métal tel que le platine, l'or, l'argent, le cobalt, le ruthénium.

A l'étape 303, un assemblage membrane/électrodes est réalisé en solidarisant d'une part le renfort 132 et la cathode 112 sur une face d'une membrane 113, et en solidarisant d'autre part le renfort 131 et l'anode 111 sur une autre face de la membrane 113. Un renfort et une électrode peuvent ainsi être solidarisés à la membrane 113 durant une même étape de pressage à chaud.

Pour favoriser l'adhésion des électrodes à la membrane 113 lors d'une étape de pressage à chaud, la membrane 113 et les électrodes comportent avantageusement un même matériau polymère. Ce matériau polymère présente avantageusement une température de transition vitreuse inférieure à la température du pressage à chaud. Le matériau polymérisable utilisé pour former ce matériau polymère pourra être le ionomère commercialisé sous la référence commerciale Nafion DE2020.

A l'étape 304, on retire les parties à l'intérieur des contours prédécoupés des renforts 131 et 132. Les ouvertures médianes des renforts 131 et 132 sont ainsi ménagées, de façon à découvrir les parties médianes respectives de l'anode 111 et de la cathode 112. On a ainsi formés des renforts à partir de supports de dépôt d'une encre électrocatalytique.

A l'étape 305, on peut former les conduits 124, 125 et 126 par des découpes à travers la périphérie des empilements de couches réalisés.

A l'étape 306, les couches de diffusion gazeuse 21 et 22. La couche de diffusion gazeuse 21 est ainsi placée en contact avec la partie découverte de l'anode 111, à travers l'ouverture du renfort 131. La périphérie de la couche de diffusion gazeuse 21 recouvre la bordure interne du renfort 131. Les parties 24 et 25 de la couche de diffusion gazeuse 22 sont placées en contact avec les parties découvertes de la cathode 112, à travers les ouvertures 134 et 135. La périphérie de la couche de diffusion gazeuse 22 recouvre la bordure interne du renfort 132.

A l'étape 307, pour obtenir la cellule 1 de pile à combustible illustrée à la figure 5, l'assemblage membrane/électrodes muni des couches de diffusion gazeuse 21 et 22 peut ensuite être inclus entre deux feuilles métalliques de guidage d'écoulement 101 et 102.

## Revendications

1. Pile à combustible (2), **caractérisée en ce qu'**elle comprend :
- un assemblage membrane/électrodes (111, 112, 113) comportant une cathode fixée sur une membrane échangeuse de protons ;
- une plaque conductrice (102) délimitant un canal d'écoulement (106) entre une entrée d'air (125) et une sortie d'eau (126) ;
- une couche de diffusion gazeuse (22) recouvrant le canal d'écoulement, interposée et comprimée entre la cathode (112) et la plaque conductrice (102), la couche de diffusion gazeuse (22) comportant des première et deuxième parties (24, 25) :
- étant deux composants distincts accolés au niveau d'une interface, et présentant des bordures accolées de formes complémentaires et non rectilignes ;
- présentant des compositions différentes ;
- présentant une même épaisseur sous ladite compression ;
- la composition de la première partie présentant une densité de courant en conditions sèches supérieure à celle de la composition de la deuxième partie ;
- la composition de la deuxième partie présentant une densité de courant en conditions humides supérieure à celle de la composition de la première partie ;
- la première partie s'étendant entre 15 et 50% de la longueur du canal d'écoulement depuis l'entrée d'air et la deuxième partie s'étendant entre 50 et 85% de la longueur du canal depuis la sortie d'eau.

2. Pile à combustible (1) selon la revendication 1, comprenant un renfort (132) fixé à l'assemblage membranes/électrodes, le renfort (132) comportant :
- une première ouverture (134) médiane traversée par la première partie (24) de la couche de diffusion gazeuse ;
- une deuxième ouverture (135) médiane traversée par la deuxième partie (25) de la couche de diffusion gazeuse ;
- une bande (133) séparant les première et deuxième ouvertures et superposée à l'interface entre les première et deuxième parties de la couche de diffusion gazeuse (22).

3. Pile à combustible (1) selon la revendication 2, dans laquelle ladite bande (133) présente une largeur comprise entre 1 et 2mm.

4. Procédé de fabrication d'une pile à combustible (1) comprenant les étapes de :
- accoler des première et deuxième parties (24, 25) d'une couche de diffusion gazeuse (22) présentant des compositions différentes, les première et deuxième parties (24, 25) étant deux composants distincts accolés au niveau d'une interface (26) et présentant des bordures accolées de formes complémentaires et non rectilignes, la composition de la première partie présentant une densité de courant en conditions sèches supérieure à celle de la composition de la deuxième partie, la composition de la deuxième partie présentant une densité de courant en conditions humides supérieure à celle de la composition de la première partie ;
- recouvrir un canal d'écoulement (106) d'une plaque conductrice (102) avec la couche de diffusion gazeuse (22), le canal d'écoulement s'étendant entre une entrée d'air (125) et une sortie d'eau (126), la première partie s'étendant entre 15 et 50% de la longueur du canal d'écoulement depuis l'entrée d'air et la deuxième partie s'étendant entre 50 et 85 de la longueur du canal depuis la sortie d'eau ;
- fixer un renfort (132) à un assemblage membrane/électrodes préalablement à l'application ultérieure des première et deuxième parties contre la cathode de cet assemblage membrane/électrodes, le renfort (132) comportant une première ouverture (134) médiane, une deuxième ouverture (135) médiane et une bande (133) séparant les première et deuxième ouvertures médianes ;
- superposer ladite interface (26) à ladite bande (133) ;
- appliquer les première et deuxième parties (24, 25) contre la cathode (112) à travers les première et deuxième ouvertures médianes (134, 135) respectivement;
- comprimer les première et deuxième parties (24, 25) de la couche de diffusion gazeuse entre la plaque conductrice (102) et la cathode (112) de sorte que les première et deuxième parties présentent une même épaisseur.

## Patentansprüche

1. Brennstoffzelle (2), die **dadurch gekennzeichnet ist, dass** sie umfasst:
- eine Membran-Elektroden-Anordnung (111, 112, 113), die eine an einer Protonenaustauschmembran befestigte Kathode umfasst;
- eine leitfähige Platte (102), die einen Führungskanal (106) zwischen einem Lufteinlass (125) und einem Wasserauslass (126) begrenzt;
- eine den Führungskanal bedeckende Gasdiffusionsschicht (22), die zwischen der Kathode (112) und der leitfähigen Platte (102) angeordnet ist und zusammengepresst wird, wobei die Gasdiffusionsschicht (22) einen ersten und zweiten Teil (24, 25) umfasst;
- die zwei verschiedene Komponenten sind, die an einer Grenzfläche aneinandergefügt sind und aneinandergefügte Ränder mit komplementären und nicht geradlinigen Formen aufweisen;
- die unterschiedliche Zusammensetzungen aufweisen;
- die unter dem Zusammenpressen die gleiche Dicke aufweisen;
- wobei die Zusammensetzung des ersten Teils unter trockenen Bedingungen eine höhere Stromdichte als die Zusammensetzung des zweiten Teils aufweist;
- wobei die Zusammensetzung des zweiten Teils unter feuchten Bedingungen eine höhere Stromdichte als die Zusammensetzung des ersten Teils aufweist;
- wobei sich der erste Teil über 15 bis 50 % der Länge des Führungskanals vom Lufteinlass aus erstreckt und sich der zweite Teil über 50 bis 85 % der Länge des Kanals vom Wasserauslass aus erstreckt.

2. Brennstoffzelle (1) nach Anspruch 1, die eine Verstärkung (132) umfasst, die an der Membran-Elektroden-Anordnung befestigt ist, wobei die Verstärkung (132) umfasst:
- eine erste mittlere Öffnung (134), die vom ersten Teil (24) der Gasdiffusionsschicht durchquert wird;
- eine zweite mittlere Öffnung (135), die vom zweiten Teil (25) der Gasdiffusionsschicht durchquert wird;
- einen Streifen (133), der die erste und zweite Öffnung trennt und über der Grenzfläche zwischen dem ersten und zweiten Teil der Gasdiffusionsschicht (22) angeordnet ist.

3. Brennstoffzelle (1) nach Anspruch 2, wobei der Streifen (133) eine Breite zwischen 1 und 2 mm aufweist.

4. Verfahren zur Herstellung einer Brennstoffzelle (1), umfassend die folgenden Schritte:
- Aneinanderfügen des ersten und zweiten Teils (24, 25) einer Gasdiffusionsschicht (22), die unterschiedliche Zusammensetzungen aufweisen, wobei der erste und zweite Teil (24, 25) zwei verschiedene Komponenten sind, die an einer Grenzfläche (26) aneinandergefügt sind und aneinandergefügte Ränder mit komplementären und nicht geradlinigen Formen aufweisen, wobei die Zusammensetzung des ersten Teils unter trockenen Bedingungen eine höhere Stromdichte als die Zusammensetzung des zweiten Teils aufweist, wobei die Zusammensetzung des zweiten Teils unter feuchten Bedingungen eine höhere Stromdichte als die Zusammensetzung des ersten Teils aufweist;
- Bedecken eines Führungskanals (106) einer leitfähigen Platte (102) mit der Gasdiffusionsschicht (22), wobei sich der Führungskanal zwischen einem Lufteinlass (125) und einem Wasserauslass (126) erstreckt, wobei sich der erste Teil über 15 bis 50 % der Länge des Führungskanals vom Lufteinlass aus erstreckt und sich der zweite Teil über 50 bis 85 % der Länge des Kanals vom Wasserauslass aus erstreckt;
- Befestigen einer Verstärkung (132) an einer Membran-Elektroden-Anordnung vor dem späteren Applizieren des ersten und zweiten Teils an der Kathode dieser Membran-Elektroden-Anordnung, wobei die Verstärkung (132) eine erste mittlere Öffnung (134), eine zweite mittlere Öffnung (135) und einen Streifen (133), der die erste und zweite mittlere Öffnung trennt, umfasst;
- Anordnen der Grenzfläche (26) über dem Streifen (133);
- Applizieren des ersten und zweiten Teils (24, 25) an der Kathode (112) durch die erste bzw. zweite mittlere Öffnung (134, 135) hindurch;
- Zusammenpressen des ersten und zweiten Teils (24, 25) der Gasdiffusionsschicht zwischen der leitfähigen Platte (102) und der Kathode (112), so dass der erste und zweite Teil die gleiche Dicke aufweisen.

## Claims

1. Fuel cell stack (1), **characterized in that** it comprises:
- a membrane electrode assembly (111, 112, 113) comprising a cathode fastened to a proton exchange membrane;
- a conductive plate (102) delimiting a flow channel (106) between an air inlet (125) and a water outlet (126);
- a gas diffusion layer (22) covering the flow channel, inserted and compressed between the cathode (112) and the conductive plate (102), the gas diffusion layer (22) comprising first and second portions (24, 25):
- being two separate components that adjoin at an interface, and that have adjoining edges of complementary and non-rectilinear shape;
- having different compositions;
- having a same thickness under said compression;
- the composition of the first portion having a current density under dry conditions greater than that of the composition of the second portion;
- the composition of the second portion having a current density under wet conditions greater than that of the composition of the first portion;
- the first portion extending between 15 and 50% of the length of the flow channel from the air inlet and the second portion extending between 50 and 85% of the length of the channel from the water outlet.

2. Fuel cell stack (1) according to Claim 1, comprising a reinforcement (132) fastened to the membrane electrode assembly, the reinforcement (132) comprising:
- a first median opening (134) crossed by the first portion (24) of the gas diffusion layer;
- a second median opening (135) crossed by the second portion (25) of the gas diffusion layer;
- a strip (133) separating the first and second openings and superposed on the interface between the first and second portions of the gas diffusion layer (22).

3. Fuel cell stack (1) according to Claim 2, wherein said strip (133) has a width of between 1 and 2 mm.

4. Process for manufacturing a fuel cell stack (1) comprising the steps of:
- adjoining first and second portions (24, 25) of a gas diffusion layer (22) having different compositions, the first and second portions (24, 25) being two separate components that adjoin at an interface (26) and that have adjoining edges of complementary and non-rectilinear shape, the composition of the first portion having a current density under dry conditions greater than that of the composition of the second portion, the composition of the second portion having a current density under wet conditions greater than that of the composition of the first portion;
- covering a flow channel (106) of a conductive plate (102) with the gas diffusion layer (22), the flow channel extending between an air inlet (125) and a water outlet (126), the first portion extending between 15 and 50% of the length of the flow channel from the air inlet and the second portion extending between 50 and 85% of the length of the channel from the water outlet;
- fastening a reinforcement (132) to a membrane electrode assembly prior to the subsequent application of the first and second portions against the cathode of this membrane electrode assembly, the reinforcement (132) comprising a first median opening (134), a second median opening (135) and a strip (133) that separates the first and second median openings;
- superposing said interface (26) on said strip (133);
- applying the first and second portions (24, 25) against the cathode (112) across the first and second median openings (134, 135) respectively;
- compressing the first and second portions (24, 25) of the gas diffusion layer between the conductive plate (102) and the cathode (112) so that the first and second portions have the same thickness.
